# EUROPÄISCHE PATENTSCHRIFT

(11) **EP 3 177 843 B1**
(45) Veröffentlichungstag und Bekanntmachung des Hinweises auf die Patenterteilung: **01.12.2021**
(21) Anmeldenummer: 15754107.9
(22) Anmeldetag: 23.07.2015
(51) Int. Cl.: F16D 13/68, F16D 21/00, F16D 13/52, F16D 23/14, F16D 25/10, F16D 21/06

(54) **AXIALE LAMELLENKUPPLUNG**
AXIAL MULTI-PLATE CLUTCH
EMBRAYAGE MULTIDISQUE AXIAL

(30) Priorität: 06.08.2014 DE 102014215601; 19.12.2014 DE 102014226559
(43) Veröffentlichungstag der Anmeldung: 14.06.2017
(73) Patentinhaber: Schaeffler Technologies AG & Co. KG, 91074 Herzogenaurach (DE)
(72) Erfinder: NÖHL, Oliver, 77830 Bühlertal (DE); TEPPER, Philipp, 77815 Bühl (DE)
(86) Internationale Anmeldenummer: PCT/DE2015/200414
(87) Internationale Veröffentlichungsnummer: WO 2016/019958

(56) Entgegenhaltungen:
- DE-A1-102004 012 948
- DE-A1-102011 081 909
- DE-A1-102012 212 310
- DE-A1-102012 218 829
- DE-A1-102013 226 359
- None

## Beschreibung

Die vorliegende Erfindung betrifft eine Doppelkupplung, insbesondere zum Einsatz in einem Antriebsstrang eines Kraftfahrzeugs. Doppelkupplungen sind z. B. aus der DE 10 2010 051 447 A1 bekannt. Hierbei sind die Lamellenpakete der einzelnen Kupplungen der Doppelkupplung radial zueinander angeordnet. Hierdurch wird ein relativ großer radialer Bauraum benötigt. Eine axiale Anordnung mehrerer Teilkupplungen mit unterschiedlichen Außendurchmessern ist in DE 20 2013 226 359 A1 vorgeschlagen.

Bezüglich weiteren Standes der Technik wird auf die DE 10 2004 012948 A1, die DE 10 2011 081909 A1, die DE 10 2012 218829 A1 und die DE 10 2012 212310 A1 verwiesen.

Die Aufgabe der Erfindung besteht darin den radialen Bauraum einer Doppelkupplung zu verringern. Die Aufgabe wird gelöst durch eine doppelte Lamellenkupplung gemäß Anspruch 1. Weiterbildungen der Erfindung sind in den Unteransprüchen beschrieben.

Ein Kupplungsaggregat umfasst wenigstens zwei Teilkupplungen, wobei jede Teilkupplung als Lamellenkupplung mit einem Lamellenpaket ausgebildet ist, die beiden Lamellenpakete in axialer Richtung hintereinander angeordnet sind und die Lamellenpakete der Teilkupplungen in axialer Richtung überlappungsfrei angeordnet sind.

Dadurch kann das Kupplungsaggregat radial raumsparend ausgeführt sein. Der kompakte Aufbau kann in unterschiedlichen Anwendungsfällen vorteilhaft beispielsweise mit einem Antriebsmotor oder einem Getriebe integriert werden.

Jedem Lamellenpaket ist erfindungsgemäß ein hydraulisches Betätigungsorgan zugeordnet, um das Lamellenpaket axial zu komprimieren und so einen Drehmomentfluss durch die zugeordnete Teilkupplung zu ermöglichen. Dabei umfassen die Betätigungsorgane jeweils eine Kolben-Zylinder-Einheit und die Kolben-Zylinder-Einheiten sind konzentrisch zueinander angeordnet. Eine voneinander unabhängige Betätigung der beiden Lamellenpakete der beiden Teilkupplungen kann auf diese Weise raumsparend vorgesehen werden. Eine konstruktive Ausgestaltung der konzentrischen Kolben-Zylinder-Einheiten kann einfach realisierbar sein.

Es ist bevorzugt, dass Betätigungsmittel zur Übertragung einer axialen Kompressionskraft vom ersten Betätigungsorgan zu einem der Lamellenpakete und vom zweiten Betätigungsorgan zum anderen Lamellenpaket vorgesehen sind. Die Betätigungsorgane müssen so nicht unmittelbar im Bereich axialer Enden der Lamellenpakete angeordnet werden. Ein zur Verfügung stehender Bauraum kann dadurch verbessert genutzt werden.

Es ist weiterhin bevorzugt, dass axiale Betätigungsrichtungen der Betätigungsorgane, um das jeweils zugeordnete Lamellenpaket zu komprimieren, in die gleiche axiale Richtung verlaufen. Die Lamellenpakete können dadurch vorteilhaft axial raumsparend angeordnet werden. Außerdem können die konzentrisch zueinander angeordneten Kolben-Zylinder-Einheiten auf diese Weise verbessert miteinander integriert werden.

In einer weiter bevorzugten Ausführungsform verläuft eine axiale Betätigungsrichtung eines Betätigungsorgans, um ein zugeordnetes Lamellenpaket zu komprimieren, von einer axialen Seite des Kupplungsaggregats, die zur Verbindung mit einem Getriebe vorgesehen ist, zu einer axialen Seite, die zur Verbindung mit einem Antriebsmotor vorgesehen ist.

Das Kupplungsaggregat kann insbesondere als Doppelkupplung sowohl in Wirkverbindung mit dem Antriebsmotor oder dem Getriebe stehen, als auch an dem Antriebsmotor oder dem Getriebe angebracht sein. Der Einsatz des Kupplungsaggregats in einer Antriebseinheit, insbesondere in einem Antriebsstrang eines Kraftfahrzeugs, kann dadurch praktisch besser handhabbar sein.

Die Betätigungsorgane können gegenüber einem Element des Kupplungsaggregats axial abgestützt, das zur drehfesten Verbindung mit dem Getriebe abgestützt sein. Das Getriebe kann dadurch vorteilhaft zur Kraftübertragung einer Betätigungskraft bzw. zur Abstützung dieser Kraft verwendet werden.

Die Betätigungsorgane sind erfindungsgemäß gegenüber einer Trägereinrichtung axial abgestützt, die die Lamellenpakete der Teilkupplungen radial übersteigt, wobei die Trägereinrichtung dazu eingerichtet ist, in einem Bereich radial außerhalb der Lamellenpakete am Getriebe angebracht zu werden. Eine Montage der Elemente des Kupplungsaggregats aneinander, am Getriebe oder am Antriebsmotor kann so vereinfacht sein. Außerdem können axiale oder in Umfangsrichtung wirkende Kräfte verbesserte abgestützt werden.

In einer ersten Variante des Kupplungsaggregats ist ein Axiallager zur axialen Abstützung der Lamellenpakete gegenüber der Trägereinrichtung vorgesehen, um die Betätigungskraft bei Kompression einer der Lamellenpakete aufzunehmen. So kann verhindert werden, dass Betätigungskräfte oder daraus resultierende Kräfte über ein anliegendes Konstruktionselement übertragen werden müssen. Insbesondere kann es nicht erforderlich sein, die Betätigungskraft außerhalb des Kupplungsaggregats abzustützen. Die Handhabbarkeit und Universalität des Kupplungsaggregats können dadurch gesteigert sein.

Es ist insbesondere bevorzugt, dass die Lamellenpakete und die Betätigungsorgane miteinander zu einer separat handhabbaren Einheit integriert sind.

In einer anderen Variante ist ein Axiallager zur axialen Abstützung der Lamellenpakete gegenüber einem Gehäuseelement des Kupplungsaggregats vorgesehen, wobei das Gehäuseelement axial gegenüber der Trägereinrichtung abgestützt ist, um die Betätigungskraft bei Kompression eines der Lamellenpakete aufzunehmen. So kann der Kraftfluss innerhalb des Kupplungsaggregats bzw. dessen Gehäuse geschlossen werden, sodass die Betätigungskraft nicht extern abgestützt werden muss. Die Handhabbarkeit und Universalität des Kupplungsaggregats können auch durch diese Maßnahme gesteigert sein.

In dieser Ausführungsform ist bevorzugt, dass die Lamellenpakete und die Betätigungsorgane zwei voneinander separate Baugruppen umfassen.

Allgemein ist bevorzugt, dass das Kupplungsaggregat dazu eingerichtet ist, in einem Flüssigkeitsbad bzw. einem nicht komplett mit Öl gefüllten Raum zu laufen. Man spricht in diesem Zusammenhang auch von einer nassen oder nasslaufenden Doppelkupplung bzw. einem Kupplungsaggregat.

Ein Kupplungsaggregat umfasst bevorzugt eine radial klein bauende Doppelnasskupplung (DK), die mittels einer hydrostatischen Aktorik betätigt werden kann. Bei dieser DK sind die beiden Teilkupplungen axial angeordnet, wobei CSCs in die gleiche axiale Richtung betätigt werden können. Die eigentliche Betätigungseinrichtung rotiert nicht. Ein CSC (Concentric Slave Cylinder) umfasst ein Ausrücklager und einen hydraulischen Nehmerkolben, die vorzugsweise in einer separat handhabbaren Einheit zusammengefasst sind. Ein bevorzugterweise am Kupplungsaggregat eingesetzter Doppel-CSC umfasst zwei konzentrisch angeordnete Baugruppen der beschriebenen Art zur unabhängigen Betätigung beider Teilkupplungen einer Doppelkupplung.

Der Doppel-CSC wird bevorzugterweise über drei Arme, die radial über die Kupplung ragen, gegen den Glockenboden geschraubt. Der Kraftfluss erfolgt intern über das Deckellager. Der CSC und die DK können eine Baugruppe bilden, wie aus dem Folgenden und aus den beigefügten Figuren genauer ersichtlich wird.

In einer Ausführungsform kann der Doppel-CSC von der Kupplungsbaugruppe getrennt werden und als Einzelbaugruppe gegen den Glockenboden geschraubt werden. Der Kraftfluss erfolgt dann über das Hauptlager über den Dichtungsdeckel in das Getriebe.

Die vorgeschlagene Doppelkupplung kann unterschiedliche Ausführungsformen umfassen, von denen einige im Folgenden umrissen sind:
Ein Kupplungsaggregat umfasst wenigstens zwei Teilkupplungen, die jeweils Lamellenkupplungen sind, wobei die beiden Teilkupplungen in axialer Richtung nebeneinander angeordnet sind und die Lamellenpakete der Teilkupplungen überlappungsfrei in axialer Richtung angeordnet sind.

Die Lamellenpakete der Teilkupplungen können jeweils eine Endlamelle aufweisen und über ein Betätigungsorgan die Endlamelle axial verlagert werden um die Eingangslamellen und Ausgangslamellen in Anlage zueinander zu bringen, sodass Drehmoment übertragen werden kann. Dabei besteht das Betätigungsorgan aus einer Kolben-Zylinder-Einheit und die Kolben-Zylinder-Einheiten für die beiden Teilkupplungen sind bevorzugt ineinander radial verschachtelt bereitgestellt, insbesondere in einer Einheit in der Art eines doppelten Concentric Slave Cylinders (CSC).

In dieser Ausführungsform kann das CSC über Betätigungsmittel von einer axialen Seite aus, vorzugsweise getriebeseitig, auf beide Endlamellen beider Teilkupplungen einwirken um die Kupplungen zu betätigen.

Die Teilkupplungen können jeweils betätigbare Endlamellen zum Betätigen der Teilkupplung aufweisen und die Endlamellen der Teilkupplungen können jeweils in die gleiche Richtung, vorzugweise von der Getriebeseite zur Motorseite, axial verlagerbar sein.

Im Kupplungsaggregat nach einer der Ausführungsformen 2 oder 3 kann das Doppel-CSC gehäusefest in Bezug auf das Getriebegehäuse angeordnet sein.

Das Doppel-CSC kann ein Gehäuse aufweisen, das mehrere, vorzugsweise drei, radial verlaufende Arme ausweist, wobei die Arme bevorzugt die Lamellenkupplungen der Teilkupplungen radial übersteigen. Dabei ist das Gehäuse über die Arme fest mit der Kupplungsglocke, d. h. dem Getriebegehäuse verbunden.

Das Doppel-CSC und die Teilkupplungen können eine Baugruppe darstellen und der Kraftfluss kann über ein Deckellager zwischen Kupplungsdeckel und CSC-Gehäuse kupplungsintern geschlossen werden.

Alternativ dazu können das Doppel-CSC und die Teilkupplungen zwei Baugruppen sein, wobei das CSC mit dem Getriebegehäuse verbunden ist, vorzugsweise mittels einer Verschraubung. Der Kraftfluss bei Betätigung kann dabei über ein motorseitiges Hauptlager über einen Dichtungsdeckel des Kupplungsaggregates und über das Getriebegehäuse geschlossen werden.

Das Kupplungsaggregat kann ein nasses Kupplungsaggregat umfassen. Dabei laufen die Elemente des Kupplungsaggregats in einer flüssigen Umgebung, beispielsweise in einem Ölbad (siehe oben). Ein Strom von Flüssigkeit zu vorbestimmten Stellen des Kupplungsaggregats kann beispielsweise mittels einer Pumpe und/oder einem Flüssigkeitskanal bewirkt sein.

Weitere Ausführungsformen des Kupplungsaggregats, auf welche die Erfindung aber nicht beschränkt ist und aus denen sich eigenständige Merkmale der Erfindung ergeben können, sind in den beigefügten Figuren gezeigt. Es zeigen:
- Fig. 1: eine Doppelkupplungseinrichtung mit Kraftfluss über ein getriebeseitiges Deckellager;
- Fig. 2: eine alternative Ausführungsform einer Doppelkupplungseinrichtung zu Fig. 1 mit Kraftfluss über ein motorseitiges Hauptlager;
- Fig. 3: die Doppelkupplungseinrichtung nach Fig. 1 an einer Einrichtung zur Übertragung von Drehmoment und
- Fig. 4: eine weitere Ausführungsform einer Doppelkupplungseinrichtung.

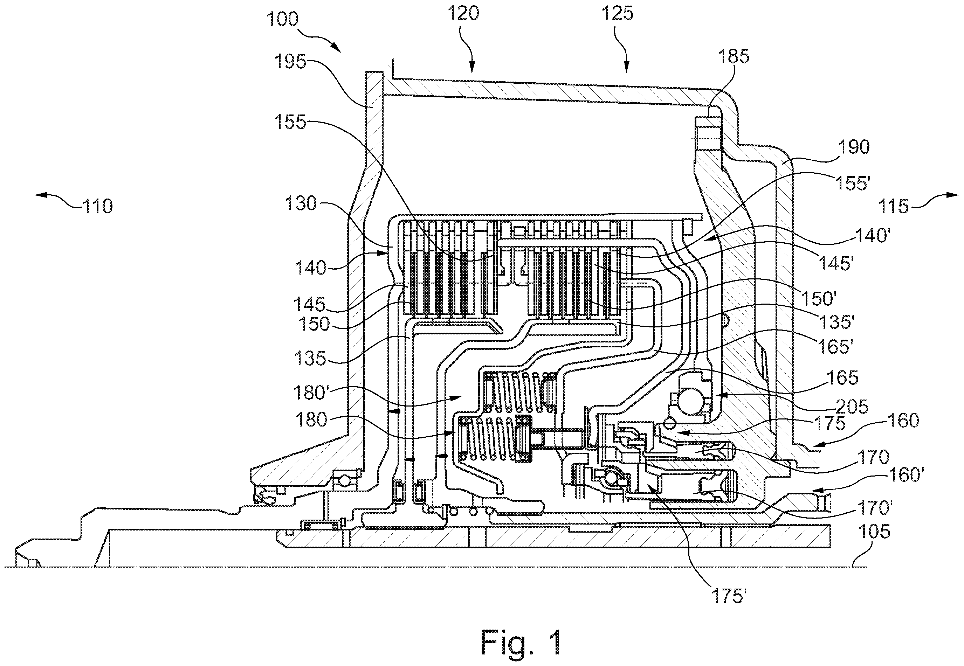

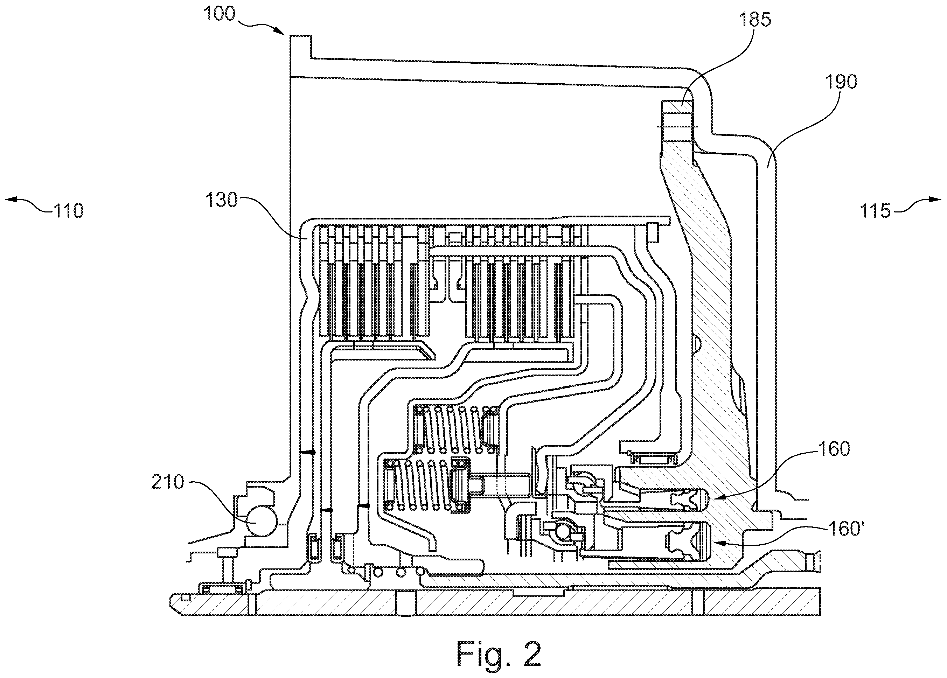

Die Figuren 1 und 2 zeigen beide eine Doppelkupplung, die jeweils in Nassbauweise und axial aufgebaut ist. In Fig. 1 erfolgt der Kraftfluss über ein Deckellager. In Fig. 2 erfolgt der Kraftfluss über ein motorseitiges Hauptlager, welches sich im Kupplungsdeckel abstützt.

In Fig. 1 ist der allgemeine Aufbau der Doppelkupplung, wie er bis auf die Lagerung auch für die Fig. 2 gilt, dargestellt. Die Betätigung der Lamellen erfolgt jeweils über Drucktöpfe aber auch die Verwendung von Hebeln, wie z. B. Tellerfedern ist denkbar. Die Anordnung vom CSC ist hier getriebeseitig dargestellt. Auch eine motorseitige Anordnung ist denkbar. Wesentlich ist, dass die Zylinder des CSC jeweils in die axial gleiche Richtung verlagert werden, um die Lamellen zu betätigen bzw. die Kolben in die gleiche Richtung betätigt werden, um die Lamellenpakete zu komprimieren.

Fig. 1 zeigt ein Kupplungsaggregat 100 mit einer Drehachse 105 zur Übertragung von Drehmoment in einem Antriebsstrang, insbesondere zwischen einem Antriebsmotor 110 und einem Getriebe 115 (beide nicht dargestellt). Das Kupplungsaggregat 100 ist als Doppelkupplung mit einer ersten Teilkupplung 120 und einer zweiten Teilkupplung 125 ausgelegt. Die Teilkupplungen 120 und 125 können separat voneinander betätigt werden, beispielsweise um eine Übertragung von Drehmoment zwischen dem Antriebsmotor 110 und einer ersten Eingangswelle des Getriebes 115 und zwischen dem Antriebsmotor 110 und einer zweiten Eingangswelle des Getriebes 115 unabhängig voneinander zu steuern. Die Doppelkupplung kann insbesondere im Zusammenhang mit einem Doppelkupplungsgetriebe eingesetzt werden. Dabei kann das Kupplungsaggregat 100 axial zwischen dem Antriebsmotor 110 und dem Getriebe 115 vorgesehen sein und mit einem oder beiden der Elemente fest verbunden oder integriert sein.

Ein Außenlamellenträger 130, der dazu eingerichtet ist, drehmomentschlüssig mit einer Abtriebswelle des Antriebsmotors 110 verbunden zu werden, und ein erster Innenlamellenträger 135, der dazu eingerichtet ist, drehmomentschlüssig mit der ersten Eingangswelle des Getriebes 115 verbunden zu werden, tragen in einem radialen Zwischenraum ein erstes Lamellenpaket 140 der ersten Teilkupplung 120. Das erste Lamellenpaket 140 umfasst erste Eingangslamellen 145 und erste Ausgangslamellen 150, die axial alternierend angeordnet sind. Die ersten Eingangslamellen 145 sind drehmomentschlüssig und axial verschiebbar mit dem Außenlamellenträger 130 und die ersten Ausgangslamellen 150 drehmomentschlüssig und axial verschiebbar mit dem ersten Innenlamellenträger 135 verbunden; eine umgekehrte Zuordnung ist ebenfalls möglich.

Das erste Lamellenpaket 140 ist an einer Seite axial gegenüber einem der Lamellenträger abgestützt, bevorzugterweise gegenüber dem Außenlamellenträger 130. An der anderen axialen Seite liegt eine erste Endlamelle 155. Dabei ist ohne Belang, ob die erste Endlamelle 155 eine Eingangslamelle 145 oder eine Ausgangslamelle 150 ist. Die erste Endlamelle 155 kann axial verfahren werden, um das erste Lamellenpaket 140 axial zu komprimieren. Dadurch entsteht ein Kraftschluss zwischen den Eingangslamellen 145 und den Ausgangslamellen 150, sodass ein Drehmoment zwischen dem Außenlamellenträger 130 und dem ersten Innenlamellenträger 135 übertragen werden kann. Man spricht bei diesem Vorgang auch davon, die erste Teilkupplung 120 zu betätigen, sodass sie schließt. Zur Betätigung der ersten Teilkupplung 120 bzw. zur Kompression des ersten Lamellenpakets 140 ist ein Betätigungsorgan 160 vorgesehen, das dazu eingerichtet ist, eine axial wirkende Betätigungskraft bereitzustellen. Diese Betätigungskraft wird auf die erste Endlamelle 155 übertragen, und zwar vorzugsweise mittels eines ersten Betätigungsmittels 165, das insbesondere topfförmig ausgeführt sein kann, wobei es auch als Drucktopf bezeichnet wird. Das erste Betätigungsorgan 160 ist bevorzugterweise hydraulisch gebildet und umfasst eine Kolben-Zylinder-Einheit. Vorliegend ist dazu ein erster Kolben 170 bereitgestellt, der bevorzugterweise über ein erstes Axiallager 175 auf das erste Betätigungsmittel 165 wirkt. Um das erste Betätigungsmittel 165 gegen den ersten Kolben 170 und diesen in den Zylinder zu pressen, ist ein erstes elastisches Element 180 vorgesehen. Dadurch kann die erste Endlamelle 155 entlastet werden, wenn eine Betätigung der ersten Teilkupplung 120 nicht erfolgt bzw. nachlässt. Die erste Teilkupplung 120 kann dadurch in Schlupf geraten oder trennen, sodass die Drehmomentübertragung über die erste Teilkupplung 120 verringert oder aufgehoben ist.

Die zweite Teilkupplung 125 ist im Wesentlichen so wie die erste Teilkupplung 120 aufgebaut; ihre Elemente tragen korrespondierende Bezugszeichen, jeweils mit einem Strich versehen. So sind ein zweiter Innenlamellenträger 135', ein zweites Lamellenpaket 140', zweite Eingangslamellen 145', zweite Ausgangslamellen 150', eine zweite Endlamelle 155', ein zweites Betätigungsorgan 160', ein zweites Betätigungsmittel 165', ein zweiter Kolben 170', ein zweites Axiallager 175' und ein zweites elastisches Element 180' vorgesehen. Für diese Elemente gelten allgemein die oben mit Bezug auf die erste Teilkupplung 120 angegebenen Variationsmöglichkeiten. Der zweite Innenlamellenträger 135' ist zur Verbindung mit einer zweiten Eingangswelle des Getriebes 115 vorgesehen und die zweite Teilkupplung 125 ist dazu vorgesehen, eine Übertragung von Drehmoment zwischen dem Antriebsmotor 110 und der zweiten Eingangswelle zu steuern.

Es ist bevorzugt, dass die Teilkupplungen 120 und 125 axial zueinander angeordnet sind. Insbesondere ist bevorzugt, dass axiale innere und äußere Begrenzungen der Lamellenpakete 140, 140' miteinander übereinstimmen. Weiter ist bevorzugt, dass Betätigungsrichtungen, in denen jeweils eine axiale Kraft auf die Endlamellen 155, 155' ausgeübt wird, um die jeweilige Teilkupplung 120, 125 zu betätigen bzw. das zugeordnete Lamellenpaket 140, 140' axial zu komprimieren, gleich gerichtet sind.

Weiter ist bevorzugt, dass die Betätigungsorgane 160, 160' zueinander konzentrisch und insbesondere konzentrisch zur Drehachse 105 angeordnet sind. Außerdem können die Betätigungsorgane 160, 160' um die Eingangs- und Ausgangswellen des Kupplungsaggregats 100 drehbar gelagert sein. Zylinder der Betätigungsorgane 160, 160' können so vereinfacht miteinander integriert sein. In der vorliegenden Ausführungsform sind die Zylinder in einer Trägereinrichtung 185 miteinander integriert, die konzentrische axiale Ringnuten aufweist, in die die hohlzylinderförmigen Kolben 170, 170' axial eingeführt sind. Es ist bevorzugt, dass die Trägereinrichtung 185 die Teilkupplungen 120, 125 bzw. deren zugeordnete Lamellenpakete 140, 140' axial übersteigt, das heißt, sich wenigstens abschnittsweise radial weiter nach außen erstreckt als die Elemente der Teilkupplungen 120, 125. Dazu kann die Trägereinrichtung 185 einen oder mehrere radiale Arme umfassen. Die Trägereinrichtung 185 ist bevorzugterweise in einem Bereich radial außerhalb der Teilkupplungen 120, 125 bzw. deren Lamellenpakete 140, 140' axial oder in Umfangsrichtung gegenüber einem Getriebegehäuse 190 abgestützt, das vom Getriebe 115 umfasst oder zur Verbindung mit dem Getriebe 115 vorgesehen sein kann. Der dargestellte Abschnitt des Getriebegehäuses 190 wird wegen ihrer Form auch Kupplungsglocke genannt. Die dargestellte und bevorzugte Ausführungsform der Betätigungsorgane 160, 160' wird auch CSC (Concentric Slave Cylinder) genannt, die Trägereinrichtung 185 kann daher auch CSC-Gehäuse genannt werden.

Es ist bevorzugt, dass die elastischen Elemente 180, 180' radial innerhalb der Lamellenpakete 140, 140' angeordnet sind. Bevorzugterweise liegen die elastischen Elemente 180, 180' in einem axialen Bereich, der durch axiale Begrenzungen einer Anordnung beider Lamellenpakete 140, 140' definiert ist. In einer Ausführungsform sind die elastischen Elemente 180, 180' radial versetzt angeordnet.

In einer Ausführungsform ist ein Gehäuseelement 195 vorgesehen, der eine Umfassung des Kupplungsaggregats 100, insbesondere in Form des Getriebegehäuses 190, axial in Richtung des Antriebsmotors 110 abschließt. Das Gehäuseelement 195 wird auch Kupplungsdeckel genannt und kann Teil des Antriebsmotors 110 oder zur Verbindung mit dem Antriebsmotor 110 eingerichtet sein. Am Gehäuseelement 195 ist üblicherweise ein Radiallager vorgesehen, um eine zum Antriebsmotor 110 führende Welle zu lagern. Dieses Radiallager wird auch Deckellager genannt.

Um eine Betätigungskraft auf die Endlamellen 155, 155' auszuüben, müssen die Betätigungsorgane 160, 160' axial abgestützt werden. Dazu ist es bevorzugt, den Kraftschluss innerhalb der Kupplungsanordnung 100 zu schließen, das heißt, die Zylinder der Betätigungsorgane 160, 160' - die vorliegend aus der Trägereinrichtung 185 gebildet sind - axial gegenüber dem Außenlamellenträger 130 abzustützen, welcher das axiale Widerlager der Lamellenpakete 140, 140' auf der den Endlamellen 155, 155' abgewandten axialen Seite bildet. In der in Fig. 1 dargestellten Ausführungsform ist hierzu ein Axiallager 205 vorgesehen, das auf der dem Getriebe 115 zugewandten axialen Seite der Teilkupplungen 120, 125 bzw. deren Lamellenpaketen 140, 140' liegt. Das Axiallager 205 wird auch Deckellager genannt. Über ein radiales Abstützelement überträgt das Axiallager 205 axiale Kräfte zwischen der Trägereinrichtung 185 und dem Außenlamellenträger 130.

Fig. 2 zeigt eine alternative Ausführungsform einer Doppelkupplungseinrichtung 100 zu der in Fig. 1 dargestellten Ausführungsform, wobei der Kraftfluss auf eine andere Weise geschlossen ist. Hier ist jedoch anstelle des Axiallagers 205 ein Axiallager 210 vorgesehen, das auf der axialen Seite der Kupplung liegt, die dem Antriebsmotor 110 zugewandt ist. Das Axiallager 210 stützt axiale Kräfte, die auf den Außenlamellenträger 130 wirken, gegenüber einem weiteren Element ab. Dieses Element kann mit dem Antriebsmotor 110 verbunden sein. Bevorzugterweise umfasst dieses Element den Kupplungsdeckel 195, der axial gegenüber der Trägereinrichtung 185 abgestützt ist, beispielsweise über das Getriebegehäuse 190 oder ein dediziertes Gehäuse der Kupplungseinrichtung 100.

Allgemein ist bevorzugt, dass das Kupplungsaggregat 100 in einer flüssigen Umgebung, insbesondere in einer Umgebung von Öl, läuft. Die Flüssigkeit kann gleichzeitig als hydraulisches Fluid der Betätigungsorgane 160, 160' verwendet werden. Die Flüssigkeit kann in bekannter Weise auf einem vorbestimmten Kanal zu vorbestimmten Stellen im Kupplungsaggregat 100 geführt werden.

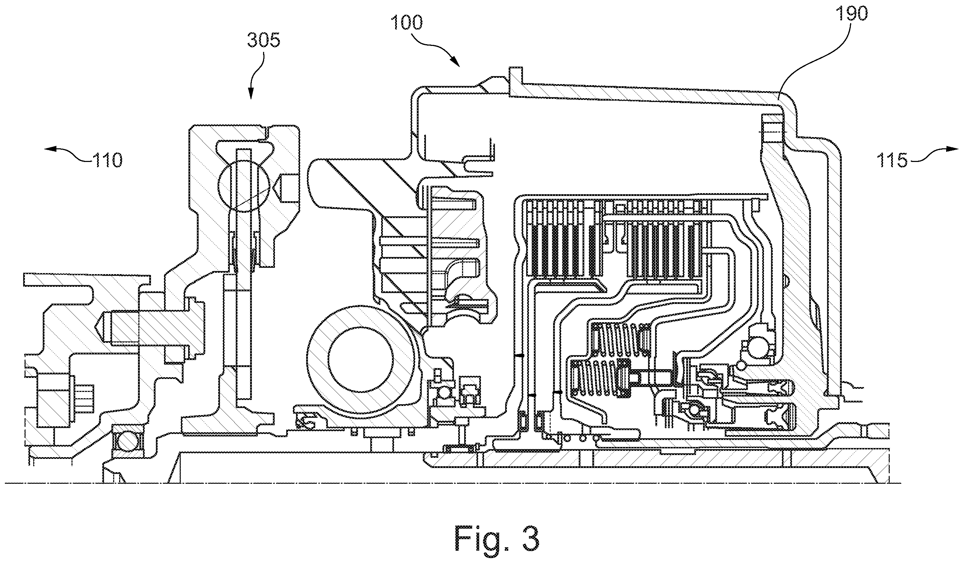

Fig. 3 zeigt eine Doppelkupplungseinrichtung 100 nach Art der von Fig. 1 an einer Einrichtung 305 zur Übertragung von Drehmoment zum Antriebsmotor 110. Die Einrichtung 305 kann insbesondere eines oder mehrere in Umfangsrichtung wirkende elastische Elemente zur Schwingungsdämpfung umfassen. In entsprechender Weise kann auch die Kupplungsanordnung 100 von Fig. 2 an der Einrichtung 305 eingesetzt werden.

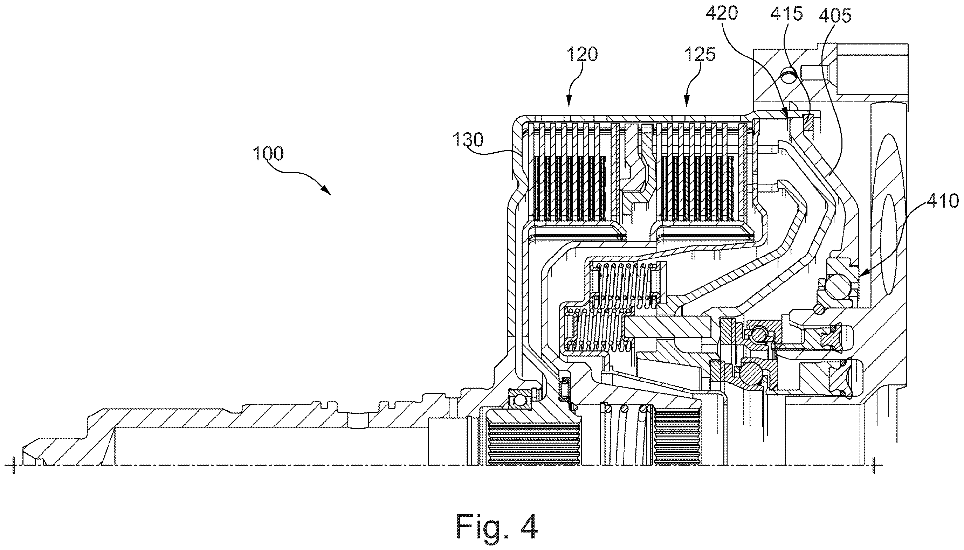

Fig. 4 zeigt eine weitere Ausführungsform einer Doppelkupplungseinrichtung 100 ähnlich der in den Figuren 1 bis 3 gezeigten Ausführungsformen. Insbesondere lehnt sich die dargestellte Ausführungsform an der von Figur 1 und 3 an.

Der Außenlamellenträger 130 ist in einem dem Getriebe 115 zugewandten axialen Bereich mittels eines Halteelements 405 und eines Lagers 410, das insbesondere als Schulterkugellager ausgebildet sein kann, axial gegenüber der Trägereinrichtung 185 abgestützt. Ein Sicherungselement 415, sichert den Außenlamellenträger 130 in einer ersten axialen Richtung am Halteelement 405. So können die axialen Betätigungskräfte der Teilkupplungen 120 und 125 seitens der Trägereinrichtung 185 (dem CSC-Deckel) in den Außenlamellenträger eingeleitet werden. In der dargestellten Ausführungsform ist das Sicherungselement 415 durch einen Haltering gebildet, der in einer radial nach innen offenen, umlaufenden Nut des Außenlamellenträgers 130 liegt. Bevorzugterweise ist der Haltering nicht geschlossen, so dass er zur Montage oder Demontage radial zusammen gedrückt werden kann.

Während einer Montage des Kupplungsaggregats 100 müssen die elastischen Elemente 180, 180' axial komprimiert werden, um das Sicherungselement 415 am Außenlamellenträger 130 befestigen zu können. Dazu werden einander entgegen gesetzte axiale Kräfte auf das Halteelement 405 und den Außenlamellenträger 130 ausgeübt, beispielsweise mittels einer Montagepresse.

Um zu verhindern, dass während der Montage eine übermäßige Kompression erfolgt, die beispielsweise einen der Drucktöpfe 165, 165' eine der Teilkupplungen 120, 125 betätigen oder ein Element des Kupplungsaggregats 100 deformieren kann, ist in der dargestellten Ausführungsform am Außenlamellenträger 130 ein Absatz 420 vorgesehen, der die Kompression des Halteelements 415 gegen den Außenlamellenträger 130 begrenzt. Der Absatz 420 ist bevorzugterweise axial so weit vom Sicherungselement 415 entfernt, dass dessen Montage problemlos möglich ist, wenn das Halteelement 405 am Absatz 420 des Außenlamellenträgers 130 aufliegt. Außerdem kann der Absatz 420 Verkanten des Halteelements 405 gegenüber dem Außenlamellenträger 130 während der beschriebenen axialen Kompression begrenzen.

### Bezugszeichenliste

- 100: Kupplungsaggregat, Kupplungseinrichtung, Kupplungsanordnung, Doppelkupplungseinrichtung
- 105: Drehachse
- 110: Antriebsmotor
- 115: Getriebe
- 120: erste Teilkupplung
- 125: zweite Teilkupplung
- 130: Außenlamellenträger

- 135: erster Innenlamellenträger
- 140: erstes Lamellenpaket
- 145: erste Eingangslamellen
- 150: erste Ausgangslamellen
- 155: erste Endlamelle
- 160: erstes Betätigungsorgan
- 165: erstes Betätigungsmittel (Drucktopf)
- 170: erster Kolben
- 175: erstes Axiallager
- 180: erstes elastisches Element

- 135': zweiter Innenlamellenträger
- 140': zweites Lamellenpaket
- 145': zweite Eingangslamellen
- 150': zweite Ausgangslamellen
- 155': zweite Endlamelle
- 160': zweites Betätigungsorgan
- 165': zweites Betätigungsmittel (Drucktopf)
- 170': zweiter Kolben
- 175': zweites Axiallager
- 180': zweites elastisches Element
- 185: Trägereinrichtung (CSC-Gehäuse)
- 190: Getriebegehäuse
- 195: Gehäuseelement (Kupplungsdeckel) (Dichtungsdeckel) (motorseitig)
- 205: Axiallager (Deckellager) (getriebeseitig)
- 210: Axiallager (Hauptlager) (motorseitig)
- 305: Einrichtung zur Übertragung von Drehmoment

- 405: Halteelement
- 410: Lager
- 415: Sicherungselement
- 420: Absatz

## Patentansprüche

1. Ein Kupplungsaggregat (100) umfasst wenigstens zwei Teilkupplungen (120, 125), wobei
- jede Teilkupplung (120, 125) als Lamellenkupplung mit einem Lamellenpaket (140, 140') ausgebildet ist,
- die beiden Lamellenpakete (140, 140') in axialer Richtung nebeneinander angeordnet sind,
- die Lamellenpakete (140, 140') der Teilkupplungen (120, 125) in axialer Richtung überlappungsfrei angeordnet sind und
- jedem Lamellenpaket (140, 140') ein hydraulisches Betätigungsorgan (160, 160') zugeordnet ist, um das Lamellenpaket (140, 140') axial zu komprimieren und so einen Drehmomentfluss durch die zugeordnete Teilkupplung (120, 125) zu ermöglichen, und wobei die Betätigungsorgane (160, 160') jeweils eine Kolben-Zylinder-Einheit umfassen und die Kolben-Zylinder-Einheiten konzentrisch zueinander angeordnet sind,
**dadurch gekennzeichnet, dass**
- die Betätigungsorgane (160, 160') gegenüber einer Trägereinrichtung (185)des Kupplungsaggregats (100) axial abgestützt sind, die zur drehfesten Verbindung mit einem Getriebe (115) vorgesehen ist, wobei die Trägereinrichtung die Lamellenpakete (140, 140') der Teilkupplungen (120, 125) radial übersteigt, und die Trägereinrichtung (185) dazu eingerichtet ist, in einem Bereich radial außerhalb der Lamellenpakete (140, 140') an einem Getriebe (115) angebracht zu werden.

2. Kupplungsaggregat (100) nach Anspruch 1, ferner umfassend Betätigungsmittel (165, 165') zur Übertragung einer axialen Kompressionskraft vom ersten Betätigungsorgan (160) zu einem der Lamellenpakete (140) und vom zweiten Betätigungsorgan (160') zum anderen Lamellenpaket (140').

3. Kupplungsaggregat (100) nach einem der Ansprüche 1 oder 2, wobei axiale Betätigungsrichtungen der Betätigungsorgane (160, 160'), um das jeweils zugeordnete Lamellenpaket (140, 140') zu komprimieren, in die gleiche axiale Richtung verlaufen.

4. Kupplungsaggregat (100) nach einem der vorangehenden Ansprüche, wobei eine axiale Betätigungsrichtung eines Betätigungsorgans (160, 160'), um ein zugeordnetes Lamellenpaket (140, 140') zu komprimieren, von einer axialen Seite des Kupplungsaggregats (100), die zur Verbindung mit einem Getriebe (115) vorgesehen ist, zu einer axialen Seite, die zur Verbindung mit einem Antriebsmotor (110) vorgesehen ist, verläuft.

5. Kupplungsaggregat (100) nach einem der vorigen Ansprüche, ferner umfassend ein Axiallager (205) zur axialen Abstützung der Lamellenpakete (140, 140') gegenüber der Trägereinrichtung (185), um die Betätigungskraft bei Kompression eines der Lamellenpakete (140, 140') aufzunehmen.

6. Kupplungsaggregat (100) nach Anspruch 5, wobei die Lamellenpakete (140, 140') und die Betätigungsorgane (160, 160') miteinander zu einer separat handhabbaren Einheit integriert sind.

7. Kupplungsaggregat (100) nach einem der Ansprüche 1 bis 4, ferner umfassend ein Axiallager (210) zur axialen Abstützung der Lamellenpakete (140, 140') gegenüber einem Gehäuseelement (195) des Kupplungsaggregats (100), wobei das Gehäuseelement (195) axial gegenüber der Trägereinrichtung (185) abgestützt ist, um die Betätigungskraft bei Kompression einer der Lamellenpakete (140, 140') aufzunehmen.

8. Kupplungsaggregat (100) nach Anspruch 7, wobei die Lamellenpakete (140, 140') und die Betätigungsorgane (160, 160') zwei voneinander separate Baugruppen umfassen.

9. Kupplungsaggregat (100) nach einem der vorherigen Ansprüche, wobei das Kupplungsaggregat (100) dazu eingerichtet ist, in einem Flüssigkeitsbad zu laufen.

## Claims

1. A clutch unit (100) comprises at least two partial clutches (120, 125), wherein
- each partial clutch (120, 125) is configured as a multi-plate clutch with a plate stack (140, 140'),
- the two plate stacks (140, 140') are arranged next to each other in the axial direction,
- the plate stacks (140, 140') of the partial clutches (120, 125) are arranged in the axial direction without overlapping, and
- a hydraulic actuating member (160, 160') is associated with each plate stack (140, 140') in order to axially compress the plate stack (140, 140') and thus enable a torque flow through the associated partial clutch (120, 125), and wherein the actuating members (160, 160') each comprise a piston-cylinder unit and the piston-cylinder units are arranged concentrically with respect to one another,
**characterised in that**
- the actuating members (160, 160') are axially supported in relation to a carrier device (185) of the clutch unit (100), which carrier device is provided for rotationally fixed connection with a transmission (115), wherein the carrier device radially extends beyond the plate stacks (140, 140') of the partial clutches (120, 125), and the carrier device (185) is configured to be attached to a transmission (115) in a region radially outside the plate stacks (140, 140').

2. The clutch unit (100) according to claim 1, further comprising actuating means (165, 165') for transmitting an axial compressive force from the first actuating member (160) to one of the plate stacks (140) and from the second actuating member (160') to the other plate stack (140').

3. The clutch unit (100) according to one of the claims 1 or 2, wherein axial actuation directions of the actuating members (160, 160'), to compress the respectively associated plate stacks (140, 140'), extend in the same axial direction.

4. The clutch unit (100) according to one of the preceding claims, wherein an axial actuation direction of an actuating member (160, 160'), to compress an associated plate stack (140, 140'), extends from an axial side of the clutch unit (100), provided for connection with a transmission (115), to an axial side, provided for connection to a drive motor (110).

5. The clutch unit (100) according to one of the preceding claims, further comprising an axial bearing (205) for axially supporting the plate stacks (140, 140') in relation to the carrier device (185) to receive the actuation force when one of the plate stacks (140, 140') is compressed.

6. The clutch unit (100) according to claim 5, wherein the plate stacks (140, 140') and the actuating members (160, 160') are integrated with each other to form a separately manageable unit.

7. The clutch unit (100) according to one of claims 1 to 4, further comprising an axial bearing (210) for axially supporting the plate stacks (140, 140') in relation to a housing element (195) of the clutch unit (100), wherein the housing element (195) is axially supported in relation to the carrier device (185) to receive the actuation force when one of the plate stacks (140, 140') is compressed.

8. The clutch unit (100) according to claim 7, wherein the plate stacks (140, 140') and the actuating members (160, 160') comprise two mutually separate assemblies.

9. The clutch unit (100) according to one of the preceding claims, wherein the clutch unit (100) is configured to run in a fluid bath.

## Revendications

1. Ensemble embrayage (100) comprenant au moins deux embrayages partiels (120, 125), dans lequel
- chaque embrayage partiel (120, 125) est réalisé sous la forme d'un embrayage multidisque doté d'un ensemble de disques (140, 140'),
- les deux ensembles de disques (140, 140') sont agencés l'un à côté de l'autre dans la direction axiale,
- les ensembles de disques (140, 140') des embrayages partiels (120, 125) sont agencés sans chevauchement dans la direction axiale et
- un organe d'actionnement (160, 160') hydraulique est associé à chaque ensemble de disques (140, 140') pour comprimer axialement l'ensemble de disques (140, 140') et permettre ainsi un flux de couple à travers l'embrayage partiel (120, 125) associé et dans lequel les organes d'actionnement (160, 160') comprennent respectivement une unité piston-cylindre et les unités piston-cylindre sont agencées de manière concentrique l'une par rapport à l'autre, **caractérisé en ce que**
- les organes d'actionnement (160, 160') sont supportés axialement par rapport à un dispositif de support (185) de l'ensemble embrayage (100), lequel dispositif de support est prévu pour la liaison bloquée en rotation avec une boîte de vitesses (115), le dispositif de support dépassant radialement les ensembles de disques (140, 140') des embrayages partiels (120, 125) et le dispositif de support (185) étant conçu pour être monté sur une boîte de vitesses (115) dans une zone située radialement en dehors des ensembles de disques (140, 140').

2. Ensemble embrayage (100) selon la revendication 1, comprenant en outre des moyens d'actionnement (165, 165') destinés à transmettre une force de compression axiale du premier organe d'actionnement (160) à un des ensembles de disques (140) et du second organe d'actionnement (160') à l'autre ensemble de disques (140').

3. Ensemble embrayage (100) selon l'une quelconque des revendications 1 ou 2, dans lequel des directions axiales d'actionnement des organes d'actionnement (160, 160'), pour comprimer l'ensemble de disques (140, 140') respectivement associé, s'étendent dans la même direction axiale.

4. Ensemble embrayage (100) selon l'une quelconque des revendications précédentes, dans lequel une direction axiale d'actionnement d'un organe d'actionnement (160, 160'), pour comprimer un ensemble de disques (140, 140') associé, s'étend d'un côté axial de l'ensemble embrayage (100), qui est prévu pour la liaison avec une boîte de vitesses (115), à un côté axial, qui est prévu pour la liaison avec un moteur d'entraînement (110).

5. Ensemble embrayage (100) selon l'une quelconque des revendications précédentes, comprenant en outre un palier de butée (205) destiné au support axial des ensembles de disques (140, 140') par rapport au dispositif de support (185) pour absorber la force d'actionnement lors de la compression de l'un des ensembles de disques (140, 140').

6. Ensemble embrayage (100) selon la revendication 5, dans lequel les ensembles de disques (140, 140') et les organes d'actionnement (160, 160') sont intégrés entre eux pour former une unité manipulable séparément.

7. Ensemble embrayage (100) selon l'une quelconque des revendications 1 à 4, comprenant en outre un palier de butée (210) destiné au support axial des ensembles de disques (140, 140') par rapport à un élément de carter (195) de l'ensemble embrayage (100), l'élément de carter (195) étant supporté axialement par rapport au dispositif de support (185) pour absorber la force d'actionnement lors de la compression de l'un des ensembles de disques (140, 140').

8. Ensemble embrayage (100) selon la revendication 7, dans lequel les ensembles de disques (140, 140') et les organes d'actionnement (160, 160') comprennent deux modules séparés l'un de l'autre.

9. Ensemble embrayage (100) selon l'une quelconque des revendications précédentes, dans lequel l'ensemble embrayage (100) est conçu pour fonctionner dans un bain de liquide.
